(19) Europäisches Patentamt
European Patent Office
Office européen des brevets

(11) EP 1 511 327 A1

(12) # EUROPEAN PATENT APPLICATION

(43) Date of publication:
**02.03.2005 Bulletin 2005/09**

(51) Int Cl.⁷: **H04N 11/04**, H04N 7/22

(21) Application number: **04020564.3**

(22) Date of filing: **30.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **01.09.2003 JP 2003308858**

(71) Applicant: **Pioneer Corporation**
**Meguro-ku, Tokyo (JP)**

(72) Inventors:
- **Ohkubo, Hideyuki**
  **Ohta-ku, Tokyo (JP)**
- **Soga, Yusuke**
  **Ohta-ku, Tokyo (JP)**
- **Nohara, Manabu**
  **Ohta-ku, Tokyo (JP)**

(74) Representative: **Goddar, Heinz J., Dr.**
**FORRESTER & BOEHMERT**
**Pettenkoferstrasse 20-22**
**80336 München (DE)**

(54) **Method for transmitting video signals**

(57) A video signal transmission method for time-division multiplexing digital video signals representing three primary colors to convert into serial video data, and transmitting the serial video data in blocks. The serial video data has 3 × M × N bits per block, where M denotes the number of bits per pixel, and N denotes the number of pixels. A transmission side system clock signal, which has a frequency higher than the frequency of a reference clock signal of the digital video signals, is generated, and each of the bits in the block is transmitted in synchronism with the transmission side system clock signal.

EP 1 511 327 A1

## Description

### BACKGROUND OF THE INVENTION

#### 1. Field of the Invention

The present invention relates to a video signal transmission method for transmitting digital video signals representing three primary colors between a transmitter and a receiver through a cable.

#### 2. Description of the Related Background Art

For transmitting digital video signals representing three primary colors through a cable, a digital transmission technique for images, called DVI (Digital Visual Interface), is generally used (for example, Japanese Patent Application Kokai No. 2002-366340). In the digital transmission technique, four communication lines are required between a transmission side and a reception side. Three communication lines are used for digital video signals of three primary colors, and the remaining one is for a pixel clock synchronized to a transmission rate of the video signals.

When a metal wire is used as a communication line, a transmission distance is limited to approximately 10 meters, and an optical fiber cable must be used for transmission over a distance larger than that.

However, when four optical fiber lines are used for transmission of digital video signals, there is a problem of a high cost. Also, even when metal lines are used, the number of lines is desirably smaller.

### SUMMARY OF THE INVENTION

It is an object of the present invention to provide a video signal transmission method for efficiently transmitting digital video signals representing the three primary colors through a single cable line.

A video signal transmission method according to the present invention is a method for time-division multiplexing digital video signals representing three primary colors to convert into serial video data, and transmitting the serial video data in blocks, the method comprising the steps of: assigning $3 \times M \times N$ bits per block to the serial video data, where M denotes the number of bits per pixel in each of the digital video signals representing the three primary colors, and N denotes the number of pixels of the digital video signal per block; generating a transmission side system clock signal having a frequency higher than the frequency of a reference clock signal of the digital video signals; and transmitting each of the bits in the block in synchronism with the transmission side system clock signal.

### BRIEF DESCRIPTION OF THE DRAWINGS

Fig. 1 is a block diagram showing an RGB video signal transmission system according to the present invention;
Fig. 2 is a flowchart showing a control operation performed by a controller in the system of Fig. 1;
Fig. 3 is a view showing the timing of each clock signal and the structure of a transmitted signal;
Fig. 4 is a flowchart showing a control operation performed by a controller in the system of Fig. 1 according to another embodiment of the present invention;
Fig. 5 is a view showing the timing of each clock signal and the structure of a transmitted signal when the control operation of Fig. 4 is performed;
Fig. 6 is a block diagram showing an RGB video signal transmission system according to another embodiment of the present invention;
Fig. 7 is a flowchart showing a control operation performed by a controller in the system of Fig. 6;
Fig. 8 is a view showing the timing of each clock signal and the structure of a transmitted signal when the control operation of Fig. 6 is performed;
Fig. 9 is a block diagram showing an RGB video signal transmission system according to another embodiment of the present invention;
Fig. 10 is a flowchart showing a control operation performed by a controller in the system of Fig. 9;
Fig. 11 is a view showing the timing of each clock signal and the structure of a transmitted signal when the control operation of Fig. 10 is performed;
Fig. 12 is a flowchart showing a control operation performed by a controller in the system of Fig. 9 according to another embodiment of the present invention; and
Fig. 13 is a view showing the timing of each clock signal and the structure of a transmitted signal when the control operation of Fig. 12 is performed.

### DETAILED DESCRIPTION OF THE INVENTION

Now, embodiments of the present invention will be described below in more detail with reference to the accompanying drawings.

Fig. 1 shows an RGB video signal transmission system to which the present invention is applied. The RGB video signal transmission system includes a transmitter 1 and a receiver 2, with a single optical fiber cable 3 connecting between the transmitter 1 and the receiver 2.

The transmitter 1 includes a transmitter video signal input I/F (Interface) 11, a P/S (Parallel to Serial) converter 12, a PLL (Phase Locked Loop) circuit 13, a 1/8 frequency divider 14, an asynchronous FIFO 15, a controller 16, a header data generator 17, a null data generator 18, a selector 19, an optical fiber transmission portion 20, a crystal oscillator 21, and a PLL circuit 22.

A portion, generally indicated by a symbol "A" in Fig. 1, which includes the transmitter video signal input I/F 11, the P/S converter 12, the PLL circuit 13, and the 1/8 frequency divider 14, and an input portion of the asynchronous FIFO 15, operates in synchronization with a pixel clock signal discussed later.

On the other hand, a portion which is generally indicated by a symbol "B" in Fig. 1, including an output portion of the asynchronous FIFO 15, the controller 16, the header data generator 17, the null data generator 18, the selector 19, and the optical fiber transmission portion 20 operates in synchronization with a system clock signal of 3.2GHz that is supplied from the PLL circuit 22.

The transmitter video signal input I/F 11 receives digital R, G, and B video signals respectively representing the three primary colors (red, green, and blue, or RGB) and the pixel clock signal. The R, G, and B video signals are parallel signals each having 10 bits per one pixel. The pixel clock signal indicates the timing of the R, G, and B video signals for each pixel. The transmitter video signal input I/F 11 supplies the digital R, G, and B video signals to the P/S converter 12, and the pixel clock signal to the PLL circuit 13 and the 1/8 frequency divider 14.

The PLL circuit 13 multiplies the frequency of the pixel clock signal by a factor of 30 to produce a multiplied clock signal, which is then supplied to the P/S converter 12. The 1/8 frequency divider 14 divides the frequency of the pixel clock signal by 8 to produce a divided clock signal, which is then supplied to the controller 16. The P/S converter 12, which is connected to the video signal output of the transmitter video signal input I/F 11, converts the R, G, and B video signals into serial video data by time division multiplexing in accordance with the multiplied clock signal supplied from the PLL circuit 13.

The asynchronous FIFO 15, which is connected to the output of the P/S converter 12, receives and holds the serial video data supplied from the P/S converter 12 and then outputs the held video data in synchronization with a system clock signal of 3.2GHz in response to a read enable signal supplied from the controller 16.

The controller 16, including such as a microcomputer, is connected to the 1/8 frequency divider 14, the asynchronous FIFO 15, the header data generator 17, the null data generator 18, and the selector 19. The controller 16 controls the operation of each of the asynchronous FIFO 15, the header data generator 17, the null data generator 18, and the selector 19 in accordance with the divided clock signal from the 1/8 frequency divider 14 and the system clock signal. Although the timing of such operations will be described later, control signals include the aforementioned read enable signal generated for the asynchronous FIFO 15, a header generation command signal generated for the header data generator 17, a null generation command signal generated for the null data generator 18, and a selector command signal generated for the selector 19.

Upon reception of the header generation command signal supplied from the controller 16, the header data generator 17 supplies header data to the selector 19 in response to the header generation command signal. The header data has a predetermined number of bits (e.g., 8 bits) and a unique bit pattern.

Upon reception of the null generation command signal supplied from the controller 16, the null data generator 18 supplies null data to the selector 19 in response to the null generation command signal. All pieces of null data are indicative of zero. Upon reception of a null generation stop command signal supplied from the controller 16, the null data generator 18 stops generating null data.

In response to the selector command signal from the controller 16, the selector 19 selectively supplies one of the pieces of the serial video data output from the asynchronous FIFO 15, the header data output from the header data generator 17, and the null data output from the null data generator 18 to the optical fiber transmission portion 20.

The optical fiber transmission portion 20, which is connected to the optical fiber cable 3, converts data output from the selector 19 at a transmission rate of 3.2GHz into an optical signal, which is then sent to the optical fiber cable 3.

The PLL circuit 22 multiplies the frequency of an oscillation signal of 160MHz generated by the crystal oscillator 21 by a factor of 20 to produce the aforementioned system clock signal.

The receiver 2 includes an optical fiber reception portion 31, a header detector 32, a pixel clock generator 33, a PLL circuit 34, a switching circuit 35, a switching controller 36, asynchronous FIFOs 37 - 39, a PLL circuit 40, a video signal output IF 41, a crystal oscillator 42, a PLL circuit 43, and a CDR (Clock Data Recovery) circuit 44.

As shown generally by a symbol "C" in Fig. 1, a portion including the optical fiber reception portion 31, the header detector 32, the pixel clock generator 33, the PLL circuit 34, the switching circuit 35, the switching controller 36, input portions of the asynchronous FIFOs 37 - 39, the PLL circuit 43, and the CDR circuit 44 operates in synchronization with the system clock signal of 3.2GHz.

On the other hand, as shown generally by a symbol "D" in Fig. 1, a portion including output portions of the asynchronous FIFOs 37 - 39, the PLL circuit 40, and the video signal output IF 41 operates in synchronization with the pixel clock signal.

The optical fiber reception portion 31, which is connected to the optical fiber cable 3, receives the optical signal supplied via the optical fiber cable 3 and then converts the received optical signal into a digital signal (received data) for output. The data output of the optical fiber reception portion 31 is connected with the header detector 32, the switching circuit 35, and the CDR circuit 44.

The PLL circuit 43 multiplies the frequency of the oscillation signal of 160MHz generated by the crystal oscillator 42 by a factor of 20 to produce the clock signal of 3.2GHz.

The CDR circuit 44, formed as an IC chip, produces the system clock signal of 3.2GHz which is in phase with the received data supplied from the optical fiber reception portion 31 in response to the clock signal of 3.2GHz outputted from the PLL circuit 43. The system clock signal of 3.2GHz is used as the reference clock for the aforementioned portion within the receiver 2 to operate in synchronization with the system clock signal.

The header detector 32 detects the header data in the received data, supplied from the optical fiber reception portion 31, in synchronization with the system clock signal. The header detector 32 supplies a header detection signal indicative of the time of detecting the header data to the pixel clock generator 33 and the switching controller 36.

The pixel clock generator 33 generates a 1/8 pixel clock signal in synchronization with the header detection signal. The pixel clock generator 33 is connected at its output with the PLL circuit 34. The PLL circuit 34 multiplies the 1/8 pixel clock signal by a factor of 8 to produce a reproduced pixel clock signal, which is then supplied to the PLL circuit 40 and the video signal output IF 41. The PLL circuit 40 multiplies the reproduced pixel clock signal by a factor of 10 to produce a read clock signal.

In response to the header detection signal, the switching controller 36 produces an RGB switching signal indicative of the time of change in each piece of R, G, and B video data in the serial video data supplied from the optical fiber reception portion 31. That is, since each sequential order of the R, G, and B video data in the 240-bit serial video data is known in advance, the system clock signal pulses of 3.2GHz are counted with respect to the header detection signal as a reference to thereby produce the RGB switching signal.

The switching circuit 35, which is interposed between the output of the optical fiber reception portion 31 and each input of the asynchronous FIFOs 37 - 39, supplies the serial video data output from the optical fiber reception portion 31 selectively to one of the asynchronous FIFOs 37 - 39 in accordance with the RGB switching signal. That is, the switching circuit 35 supplies the R (red) serial video data of the serial video data to the asynchronous FIFO 37, the G (green) serial video data to the asynchronous FIFO 38, and B (blue) serial video data to the asynchronous FIFO 39.

Each of the asynchronous FIFOs 37 - 39 receives and holds the supplied serial video data to output the held serial video data in synchronization with the read clock signal produced by the PLL circuit 40.

The video signal output IF 41 outputs the R, G, and B video data supplied from the asynchronous FIFOs 37 - 39 as a 10-bit parallel video signal each for R, G, or B in synchronization with the reproduced pixel clock signal.

Now, the operation of the RGB video signal transmission system configured as such will be described with reference to Figs. 2 and 3. Fig. 2 is a flowchart showing the operation of the controller 16. Fig. 3 shows the pixel clock signal, the divided clock signal, the structure of the transmitted signal, the reproduced divided clock signal, and the reproduced pixel clock signal.

In the transmitter 1, the digital R, G, and B video signals and the pixel clock signal are supplied to the transmitter video signal input I/F 11, and then the P/S converter 12 converts the R, G, and B video signals into a serial signal or the serial video data. The P/S converter 12 is supplied from the PLL circuit 13 with the multiplied clock signal obtained by multiplying the pixel clock signal by a factor of 30, and is thus capable of changing 3 $\times$ 10 bits per one pixel for the three colors R, G, and B into the serial video data. The serial video data is sequentially held in the asynchronous FIFO 15.

The controller 16 is supplied from the 1/8 frequency divider 14 with the divided clock signal obtained by dividing the pixel clock signal by 8. Thus, in response to the rising edge of the divided clock signal, the controller 16 supplies the header generation command signal to the header data generator 17 (steps S1 and S3). At the same time, the controller 16 supplies the selector command signal for the selector 19 to selectively deliver the output data from the header data generator 17 (step S4). In response to the header generation command signal, the header data generator 17 immediately supplies the header data to the selector 19 in synchronization with the system clock signal of 3.2GHz. Then, the selector 19 supplies the header data to the optical fiber transmission portion 20. The header data is transmitted as an optical signal at a transmission rate of 3.2 Gbps from the optical fiber transmission portion 20 to the optical fiber reception portion 31 via the optical fiber cable 3.

The null generation stop command signal is generated in the controller 16 in step S2 before the header generation command signal is produced as shown in Fig. 2. However, the command signal is ignored because the null data generator 18 has not produced null data yet in the initial condition.

When determining that the header data generator 17 has finished generating the header data ("Yes" in step S5), the controller 16 supplies the read enable signal to the asynchronous FIFO 15 (step S6). At the same time, the controller 16 supplies the selector command signal for the selector 19 to selectively deliver the output data from the asynchronous FIFO 15 (step S7). The asynchronous FIFO 15 delivers the held serial video data in synchronization with the system clock signal of 3.2GHz. The serial video data is supplied from the asynchronous FIFO 15 to the optical fiber transmission portion 20 via the selector 19. Furthermore, the serial video data is transmitted as an optical signal at a transmission rate of 3.2 Gbps from the optical fiber transmission portion 20 to the optical fiber reception portion 31 via the optical fiber cable 3.

The serial video data to be transmitted has 3 $\times$ M $\times$ N bits per one block, where M is the number of bits per one pixel in each of the digital video signals respectively representing the three primary colors and N is the number of pixels of the digital video signal in each block. In this embodiment, the number of bits of the digital video signal is M=10 bits per one pixel and the number of pixels of the digital video signal is N=8 in each block, so that the serial video data has 240 bits per one block. The divided clock signal obtained by dividing the frequency of the pixel clock signal by 8 has a period of a block, and thus the frequency division rate 8 corresponds to the number of pixels N = 8.

Assuming that the frequency of a pixel clock signal is fpxl, and the frequency of a system clock signal used as a determination factor for the transmission rate is fsys, the number of bits per block becomes N $\times$ fsys / fpxl. The number of bits 3 $\times$ M $\times$ N per block in the serial video data is required to be smaller than the number of bits N $\times$ fsys / fpxl per block. Further, due to addition of the header data, assuming that the number of bits of the header data is H, established is the relationship of

$$3 \times M \times N + H < N \times fsys / fpxl \qquad (1)$$

In this example, assuming that the frequency fpxl of the pixel clock signal is 25 MHz, and the frequency of the system clock signal fsys is 3.2 GHz, a block has 1024 bits. Similarly, assuming that the bit number H of the header data is 8, 3 $\times$ M $\times$ N + H is equal to 248 bits. Thus, the above expression (1) is satisfied.

When the 240-bit serial video data is output from the asynchronous FIFO 15 ("Yes" in step S8), the controller 16 stops supplying the read enable signal to the asynchronous FIFO 15 (step S9). At the same time, the controller 16 supplies the null generation command signal to the null data generator 18 (step S10), and also supplies the selector command signal for the selector 19 to selectively deliver the output data from the null data generator 18 (step S11). In response to the null generation command signal, the null data generator 18 immediately supplies the null data to the selector 19 in synchronization with the system clock signal of 3.2GHz. The selector 19 supplies the null data to the optical fiber transmission portion 20. The null data is transmitted as an optical signal at a transmission rate of 3.2 Gbps from the optical fiber transmission portion 20 to the optical fiber reception portion 31 via the optical fiber cable 3.

In response to the rising edge of the divided clock signal ("Yes" in step S1), the controller 16 supplies the null generation stop command signal to the null data generator 18 (step S2) and the header generation command signal to the header data generator 17 (step S3). At the same time, the controller 16 supplies the selector command signal for the selector 19 to selectively deliver the output data from the header data generator 17 (step S4). As described above, this allows the header data to be transmitted as an optical signal at a transmission rate of 3.2 Gbps from the optical fiber transmission portion 20 to the optical fiber reception portion 31 via the optical fiber cable 3. Thereafter, the aforementioned operations are repeatedly performed in the transmitter 1. As shown in Fig. 3, the header data, the 240-bit serial video data, and the null data are sequenced in that order, the sequence being transmitted as one block of the transmitted signal. Each block is transmitted in packets.

In the receiver 2, the optical fiber reception portion 31 receives the optical signal supplied from the transmitter 1 via the optical fiber cable 3 for output as received data. The received data is supplied to the header detector 32, the switching circuit 35, and the CDR circuit 44. The CDR circuit 44 produces the system clock signal of 3.2GHz in phase with the received data. The header detector 32 detects the header data in the received data. The header detector 32 supplies the header detection signal to the pixel clock generator 33 and the switching controller 36 at the end of the header data.

The pixel clock generator 33 produces the 1/8 pixel clock signal (the reproduced divided clock signal) that rises in response to the header detection signal. That is, because the header data has been inserted in synchronization with the transmitter 1/8 pixel clock signal, the reproduced 1/8 pixel clock signal produced in the pixel clock generator 33 is synchronous with the transmitter 1/8 pixel clock signal. The PLL circuit 34 multiplies the reproduced 1/8 pixel clock signal by a factor of 8 to produce the reproduced pixel clock signal. The reproduced pixel clock signal is supplied to the video signal output IF 41, and multiplied at the PLL circuit 40 by a factor of 10 to be supplied to the asynchronous FIFOs 37 - 39 as a read clock signal.

On the other hand, upon reception of the aforementioned header detection signal, the switching controller 36 produces the RGB switching signal indicative of the time of change in each of R, G, and B video data in the received data output from the optical fiber reception portion 31. Accordingly, the RGB switching signal supplied to the switching circuit 35 allows the switching circuit 35 to supply R serial video data to the asynchronous FIFO 37 when the received data output from the optical fiber reception portion 31 is the R (red) serial video data. When the received data output from the optical fiber reception portion 31 is G (green) serial video data, the switching circuit 35 supplies the G serial video data to the asynchronous FIFO 38. When the received data output from the optical fiber reception portion 31 is B (blue) serial video data, the switching circuit 35 supplies the B serial video data to the asynchronous FIFO 39. Each of the asynchronous FIFOs 37 - 39 holds the serial video data supplied.

Each of the asynchronous FIFOs 37 - 39, supplied with the read clock signal from the PLL circuit 40, delivers the held serial video data bit by bit in synchronization with the corresponding read clock signal. The video signal output IF 41 receives 10-bit (one pixel) serial video data for each R, G, or B in one cycle of the reproduced pixel clock signal. Thus, the video signal output IF 41 can obtain the reproduced pixel clock signal as well as the digital R, G, and B video signals in synchronization therewith. These signals are equivalent to the pixel clock signal and the digital R, G, and B video signals supplied to the transmitter video signal input I/F 11.

Accordingly, even when the frequency of the transmitter pixel clock signal has changed due to the digital R, G, and B video signals to be transmitted, the receiver can obtain the reproduced pixel clock signal following the resulting frequency.

Fig. 4 is a flowchart showing the operation of the controller 16 according to another embodiment of the present invention. Fig. 5 shows the pixel clock signal, the divided clock signal, the structure of the transmitted signal, the reproduced divided clock signal, and the reproduced pixel clock signal, which are employed in the embodiment of Fig. 4. The RGB video signal transmission system according to this embodiment employs the system configuration of Fig. 1 as it is.

In Fig. 4, when the asynchronous FIFO 15 delivers the 240-bit serial video data ("Yes" in step S8), the controller 16 stops supplying the read enable signal to the asynchronous FIFO 15 (step S9) and supplies the header generation command signal to the header data generator 17 (step S21). At the same time, the controller 16 supplies the selector command signal for the selector 19 to selectively deliver the output data from the header data generator 17 (step S22). Thereafter, when the header data generator 17 has finished generating the header data ("Yes" in step S23), the controller 16 supplies the null generation command signal to the null data generator 18 (step S10) and supplies the selector command signal for the selector 19 to selectively deliver the output data from the null data generator 18 (step S11).

Accordingly, the transmitted signal is structured such that the header data is located before and after the 240-bit serial video data as shown in Fig. 5. Since the header data is transmitted twice each time the 240-bit serial video data is transmitted, it is ensured that the header detector 32 in the receiver 2 detects the header data.

Fig. 6 illustrates an RGB video signal transmission system according to another embodiment of the present invention. The system shown in Fig. 6 includes a DC balance data generator 25 in place of the null data generator 18 of the system shown in Fig. 1. The DC balance data generator 25 generates DC balance data so as to balance with the number of each "0" and "1" bits included in the 240-bit serial video data and the header data before and after it. That is, when the header data, the 240-bit serial video data, the header data, and the DC balance data define one block, the DC balance data is generated such that the number of "0" bits is equal to the number of "1" bits within the block. The DC balance data generator 25, which is provided with an up/down count function, determines the DC balance data depending on the counter value that is obtained by increasing by one when counting a bit indicative of one and decreasing by one when counting a bit indicative of zero immediately before the DC balance data is produced block by block. The output of the DC balance data generator 25 is connected to the selector 19. The other configuration is the same as that of the system shown in Fig. 1.

Fig. 7 is a flowchart showing the operation of the controller 16 according to the embodiment of Fig. 6. Fig. 8 shows the pixel clock signal, the divided clock signal, the structure of the transmitted signal, the reproduced divided clock signal, and the reproduced pixel clock signal according to the embodiment of Fig. 6.

Referring to Fig. 7, when the header data generator 17 has finished generating the header data in one block for the second time ("Yes" in step S23), the controller 16 supplies a DC balance generation command signal to the DC balance data generator 25 (step S25). Additionally, the controller 16 supplies the selector command signal for the selector 19 to selectively deliver the output data from the DC balance data generator 25 (step S26). Depending on the counter value available at that time, the DC balance data generator 25 determines the DC balance data, which is then supplied to the selector 19 in synchronization with the system clock signal of 3.2GHz. The selector 19 supplies the DC balance data to the optical fiber transmission portion 20. The DC balance data is transmitted as an optical signal at a transmission rate of 3.2 Gbps from the optical fiber transmission portion 20 to the optical fiber reception portion 31 via the optical fiber cable 3.

In response to the subsequent rising edge of the of the divided clock signal ("Yes" in step S1), the controller 16 supplies a DC balance generation stop command signal to the DC balance data generator 25 (step S27) to stop generating the DC balance data.

The system shown in Fig. 6 can employ an AC coupling in optical fiber cable transmission.

Fig. 9 shows an RGB video signal transmission system according to another embodiment of the present invention. The system shown in Fig. 9 has a numerical data generator 26 further added to the system shown in Fig. 6. The numerical data generator 26 generates numerical data indicative of the number of clocks in the 3.2GHz system clock signal appearing from the current point in time (the time at which the numerical data is generated) to the subsequent header data. The output of the numerical data generator 26 is connected to the selector 19. The other configuration is the same as that of the system shown in Fig. 6.

Fig. 10 is a flowchart showing the operation of the controller 16 according to the embodiment of Fig. 9. Fig. 11 shows the pixel clock signal, the divided clock signal, the structure of the transmitted signal, the reproduced divided clock signal, and the reproduced pixel clock signal according to the embodiment of Fig. 9.

Referring to Fig. 10, when having determined that the header data generator 17 finishes generating the header data in one block for the second time ("Yes" in step S23), the controller 16 supplies a numerical value generation command signal to the numerical data generator 26 (step S28). Additionally, the controller 16 supplies the selector command signal for the selector 19 to selectively deliver the output data from the numerical data generator 26 (step S29). Using the counter value obtained from the point in time of the rising edge of the divided clock signal in step S1, i.e., from the time at which the header data is generated to the current point in time, the numerical data generator 26 generates the numerical data from the current point in time to the subsequent header data in response to the numerical value generation command signal. The numerical data is transmitted as an optical signal at a transmission rate of 3.2 Gbps from the optical fiber transmission portion 20 to the optical fiber reception portion 31 via the optical fiber cable 3. In accordance with the numerical data transmitted, the header detector 32 knows the point in time at which the next header data will be supplied, and thus can stop detecting the header data until then. This provides an advantage of reducing power consumption in the receiver because it is made unnecessary to always determine at every system clock whether the header data is present.

Referring to Fig. 10, when the controller 16 determines that the numerical data generator 26 has finished generating the numerical data ("Yes" in step S30), the process proceeds to the aforementioned steps S25 and S26.

Fig. 12 is a flowchart showing the operation of the controller 16 according to another embodiment of the present invention. Fig. 13 shows the pixel clock signal, the divided clock signal, the structure of the transmitted signal, the reproduced divided clock signal, and the reproduced pixel clock signal according to the embodiment of Fig. 12. The RGB video signal transmission system according to this embodiment employs the system configuration of Fig. 9 as it is.

Referring to Fig. 12, when having determined that the header data generator 17 finishes generating the header data ("Yes" in step S5), the controller 16 supplies a numerical value generation command signal to the numerical data generator 26 (step S28). Additionally, the controller 16 supplies the selector command signal for the selector 19 to selectively deliver the output data from the numerical data generator 26 (step S29). Furthermore, when the controller 16 has determined that the numerical data generator 26 finishes generating the numerical data ("Yes" in step S30), the process proceeds to the aforementioned step S6 and the subsequent steps. As can be seen from Fig. 13, this embodiment has one piece of header data included in one block, and thus provides improved information transmission rates as compared with a case where two pieces of header data are included in one block. This embodiment also allows numerical data to be present immediately after the header data, the numerical data indicating the number of clocks to be counted until the next header data appears. This allows the header detector 32 in the receiver 2 to know the point in time at which the next header data will be supplied in accordance with the numerical data transmitted, thereby making it possible to stop detecting the header data for a long time period until then. Accordingly, it is possible to further reduce power consumption in the receiver.

In the aforementioned embodiments, optical fiber cables are employed as cables; however, metal cables can also be used.

Furthermore, the aforementioned embodiments employ a transmission rate of 3.2 Gbps at which signals are transmitted between the transmitter 1 and the receiver 2; however, the present invention is not limited thereto. For example, fixed rates such as 5 Gbps or 10 Gbps or variable rates may also be used. On the other hand, the pixel clock signal may have any frequency from 25 MHz to 165 MHz according to the DVI standards. However, if the pixel clock signal is increased in frequency, the number of bits in a block is decreased. Thus, it is necessary to increase the transmission rate. That is, it is necessary to satisfy the relationship of the expression (1), $3 \times M \times N + H < N \times fsys / fpxl$. Accordingly, when the pixel clock signal has the frequency of 100 MHz, the transmission rate has to be 5 Gbps or more. Further, when the pixel clock signal has the frequency of 165 MHz, the transmission rate has to be 10 Gbps or more, for example. Herein, the expression (1) gives no consideration of the number of bits of the null data, the DC balance data, or the numerical data. Thus, if such data is to be inserted into the block, the number of bits of the data has to be taken into consideration.

Furthermore, in the aforementioned embodiments, the serial video data to be transmitted has $3 \times M \times N$ bits in one block where M=10 bits per pixel of each digital video signal and the number of pixels N=8 of the digital video signal per block; however, the present invention is not limited to these M and N values.

Furthermore, in the aforementioned embodiments, R, G, and B video signals are employed as digital video signals representing the three primary colors, respectively; however, a video signal including a Y, Pb, and Pr components according to the color difference scheme may also be employed.

As described in the foregoing, according to the present invention, the serial video data carries $3 \times M \times$

N bits per block, a transmission end system clock signal is so generated as to have the frequency higher than that of a reference clock signal of the digital video signal, and the bits of the block are each transmitted in synchronization with the transmission end system clock signal. Thus, RGB video signals can be efficiently transmitted through a cable having a single line.

The features disclosed in the foregoing description, in the claims and/or in the acompanying drawings may, both separately and in any combination thereof, be material for realising the invention in diverse forms thereof.

**Claims**

**1.** A video signal transmission method for time-division multiplexing digital video signals representing three primary colors to convert into serial video data, and transmitting the serial video data in blocks, the method comprising the steps of:

assigning 3 × M × N bits per block to the serial video data, where M denotes the number of bits per pixel in each of the digital video signals representing the three primary colors, and N denotes the number of pixels of the digital video signal per block;
generating a transmission side system clock signal having a frequency higher than the frequency of a reference clock signal of the digital video signals; and
transmitting each of the bits in the block in synchronism with the transmission side system clock signal.

**2.** A video signal transmission method according to claim 1, wherein the bit number M per pixel is 10, the number of pixels N per block is 8, and the serial video data has 240 bits per block.

**3.** A video signal transmission method according to claim 1, wherein the block has a length obtained by dividing the frequency of the reference clock signal into 1/N.

**4.** A video signal transmission method according to claim 1, wherein, assuming that the frequency of the reference clock signal is fpxl, and the frequency of the transmission side system clock signal is fsys, the number of bits per block is N × fsys / fpxl, and the 3 × M × N bits are set to be smaller in number than the number of bits per block.

**5.** A video signal transmission method according to claim 1, wherein header data is inserted before the serial video data of 3 × M × N bits in the block, and after the serial video data, null data is inserted.

**6.** A video signal transmission method according to claim 1, wherein header data is inserted before the serial video data of 3 × M × N bits in the block, and after the serial video data, the header data and null data are inserted.

**7.** A video signal transmission method according to claim 1, wherein header data is inserted before the serial video data of 3 × M × N bits in the block, and after the serial video data, DC balance data is inserted such that the number of "0" bits is equal to the number of "1" bits in the block.

**8.** A video signal transmission method according to claim 5, wherein, value data is inserted after header data in the block, showing the number of clocks of the transmission side system clock signal between the header data and another header data provided in the next block.

**9.** A video signal transmission method according to claim 8, wherein the value data is inserted immediately after the header data.

**10.** A video signal transmission method according to claim 8, wherein the value data is inserted after the serial video data of the 3 × M × N bits.

FIG. 1

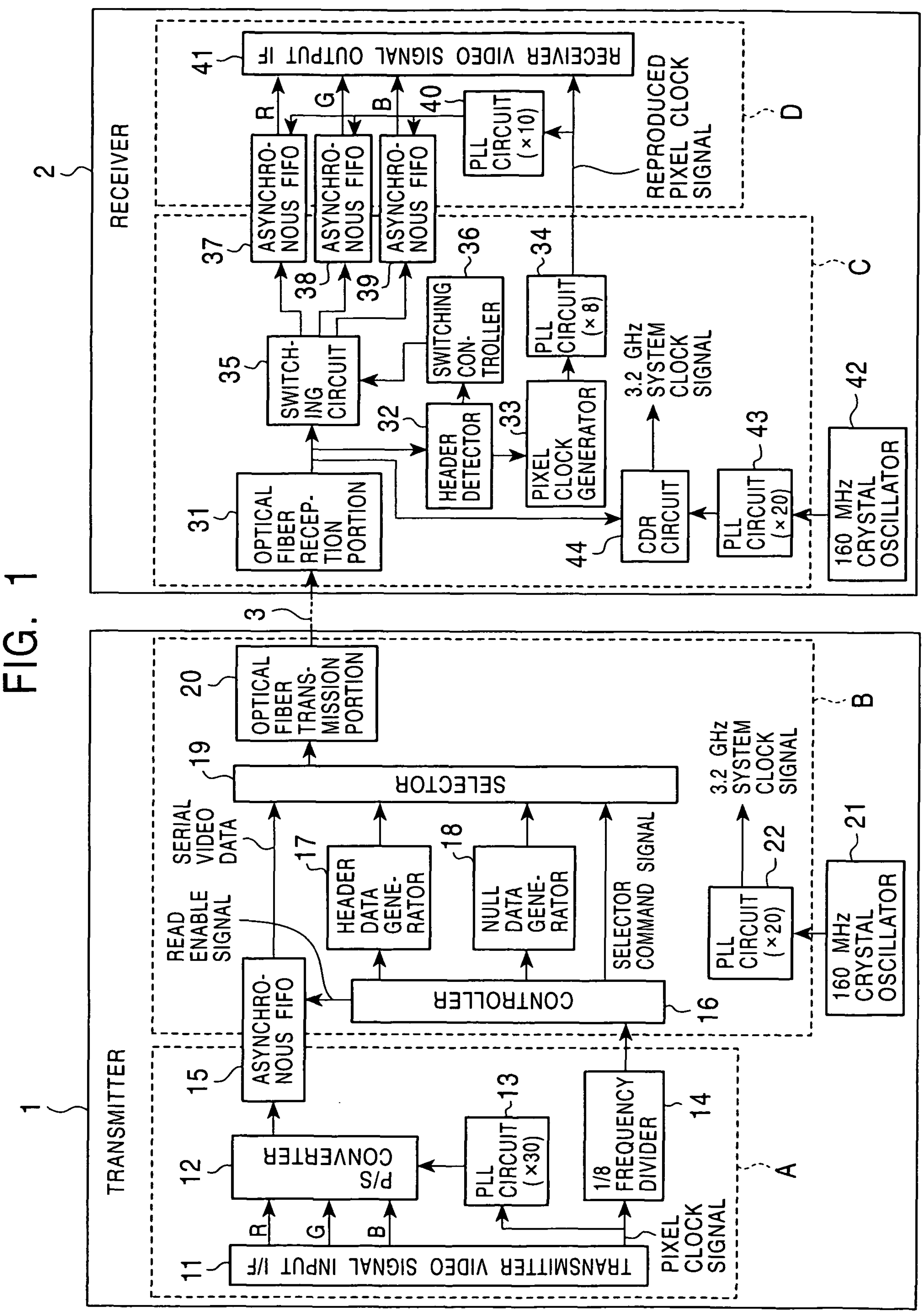
TRANSMITTER
RECEIVER
TRANSMITTER VIDEO SIGNAL INPUT I/F
P/S CONVERTER
PLL CIRCUIT (×30)
1/8 FREQUENCY DIVIDER
PIXEL CLOCK SIGNAL
R
G
B
ASYNCHRO-NOUS FIFO
READ ENABLE SIGNAL
SERIAL VIDEO DATA
CONTROLLER
HEADER DATA GENE-RATOR
NULL DATA GENE-RATOR
SELECTOR COMMAND SIGNAL
SELECTOR
OPTICAL FIBER TRANS-MISSION PORTION
PLL CIRCUIT (×20)
3.2 GHz SYSTEM CLOCK SIGNAL
160 MHz CRYSTAL OSCILLATOR
OPTICAL FIBER RECEP-TION PORTION
SWITCH-ING CIRCUIT
HEADER DETECTOR
SWITCHING CON-TROLLER
PIXEL CLOCK GENERATOR
PLL CIRCUIT (×8)
CDR CIRCUIT
ASYNCHRO-NOUS FIFO
PLL CIRCUIT (×10)
REPRODUCED PIXEL CLOCK SIGNAL
RECEIVER VIDEO SIGNAL OUTPUT IF
A
B
C
D
1
2
3
11
12
13
14
15
16
17
18
19
20
21
22
31
32
33
34
35
36
37
38
39
40
41
42
43
44

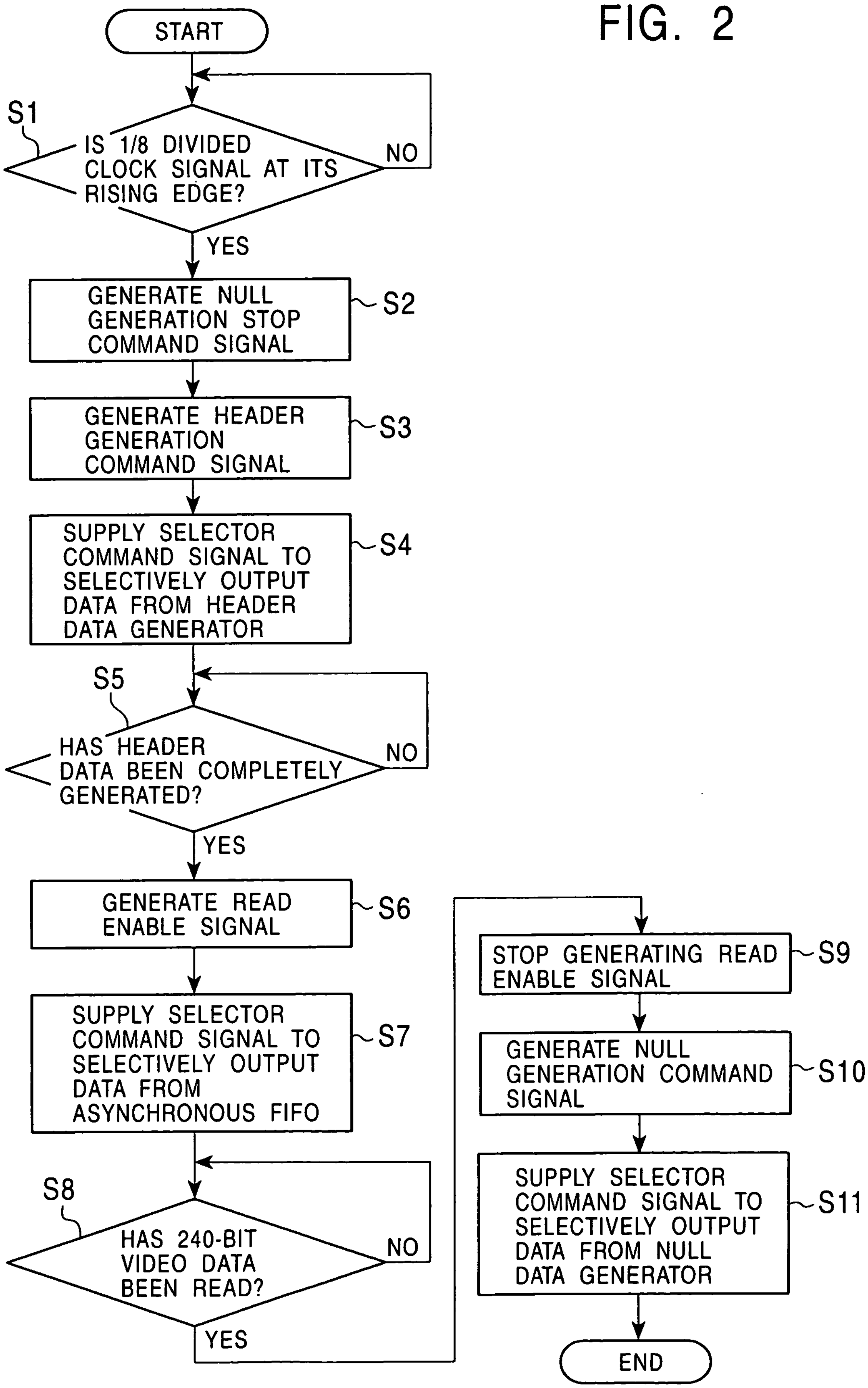
START
S1
IS 1/8 DIVIDED CLOCK SIGNAL AT ITS RISING EDGE?
NO
YES
GENERATE NULL GENERATION STOP COMMAND SIGNAL
S2
GENERATE HEADER GENERATION COMMAND SIGNAL
S3
SUPPLY SELECTOR COMMAND SIGNAL TO SELECTIVELY OUTPUT DATA FROM HEADER DATA GENERATOR
S4
S5
HAS HEADER DATA BEEN COMPLETELY GENERATED?
NO
YES
GENERATE READ ENABLE SIGNAL
S6
SUPPLY SELECTOR COMMAND SIGNAL TO SELECTIVELY OUTPUT DATA FROM ASYNCHRONOUS FIFO
S7
S8
HAS 240-BIT VIDEO DATA BEEN READ?
NO
YES
STOP GENERATING READ ENABLE SIGNAL
S9
GENERATE NULL GENERATION COMMAND SIGNAL
S10
SUPPLY SELECTOR COMMAND SIGNAL TO SELECTIVELY OUTPUT DATA FROM NULL DATA GENERATOR
S11
END

FIG. 2

FIG. 3

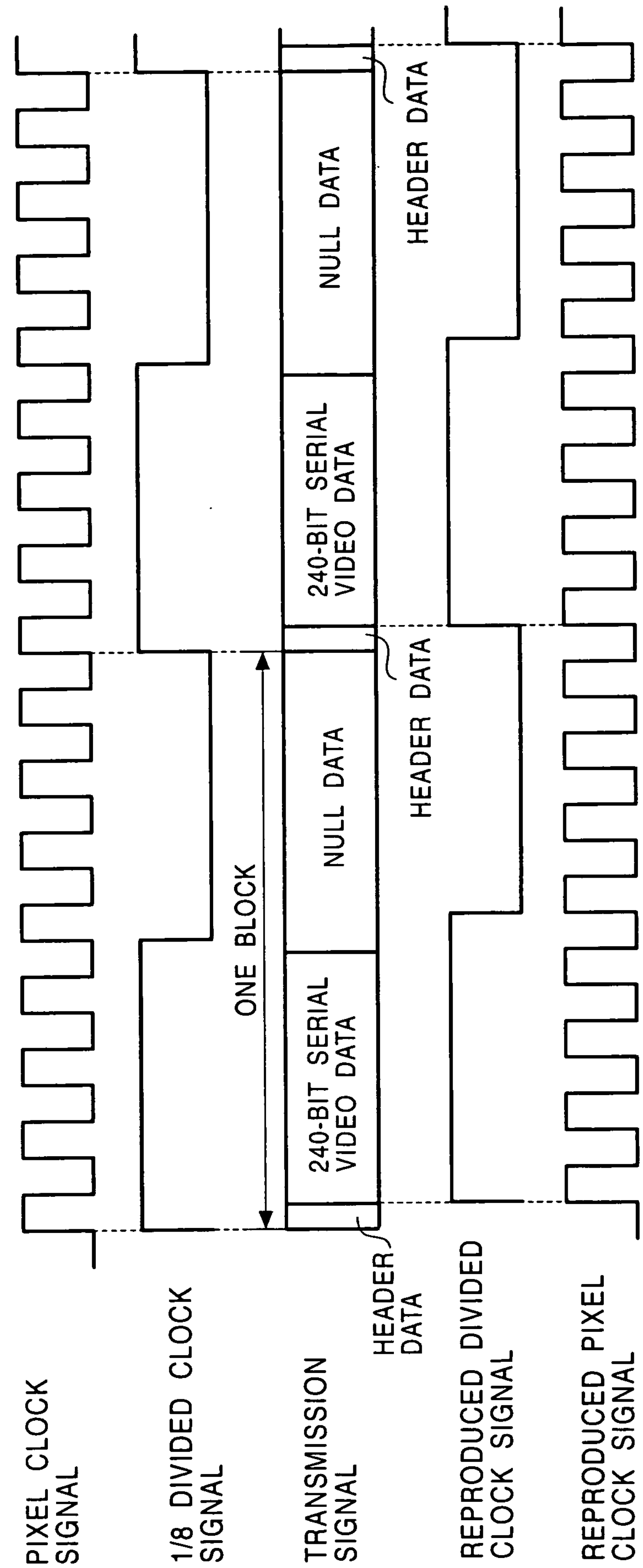
PIXEL CLOCK SIGNAL
1/8 DIVIDED CLOCK SIGNAL
TRANSMISSION SIGNAL
HEADER DATA
REPRODUCED DIVIDED CLOCK SIGNAL
REPRODUCED PIXEL CLOCK SIGNAL
ONE BLOCK
240-BIT SERIAL VIDEO DATA
NULL DATA
HEADER DATA
240-BIT SERIAL VIDEO DATA
NULL DATA
HEADER DATA

FIG. 4

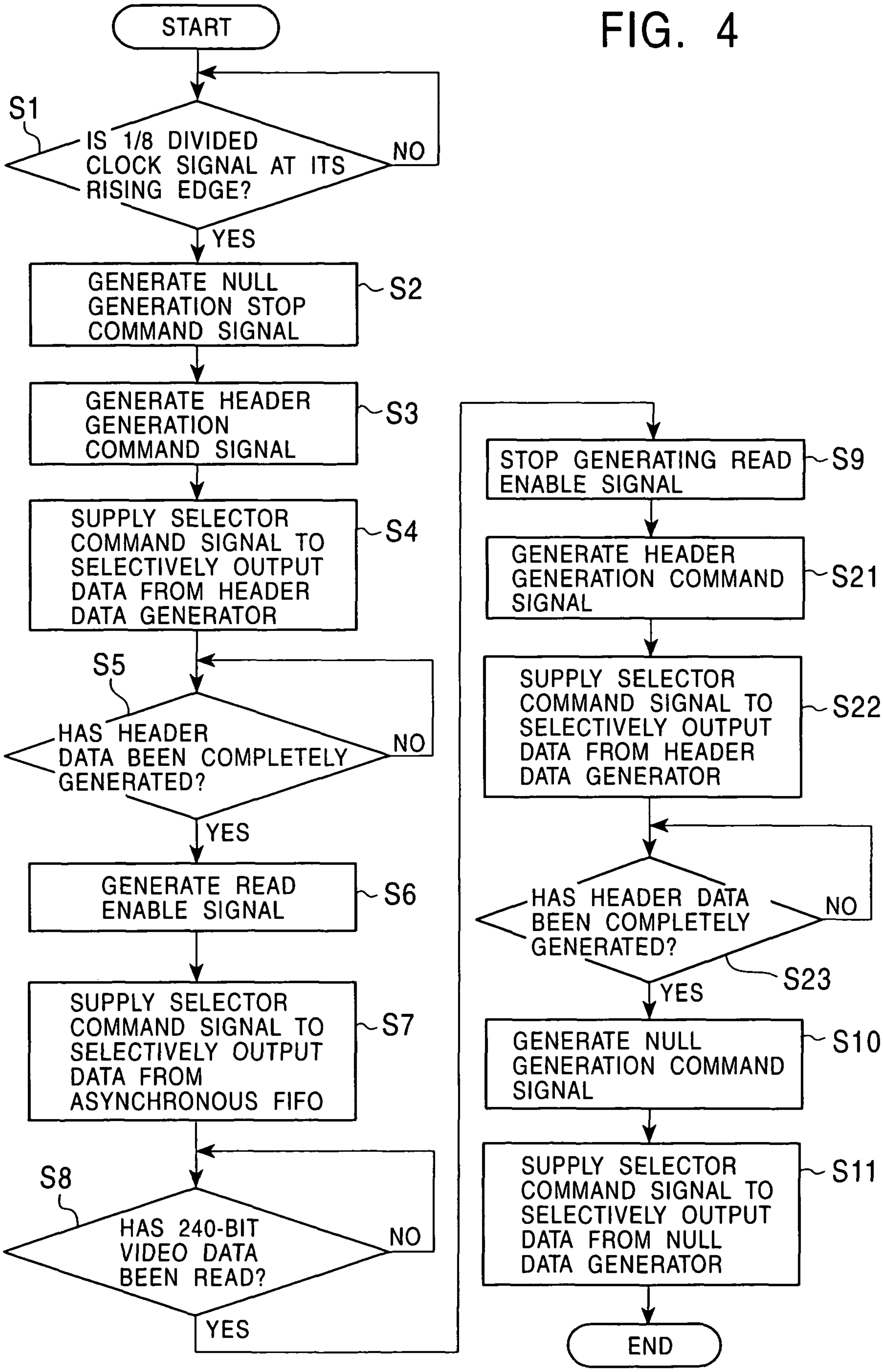
START
S1
IS 1/8 DIVIDED CLOCK SIGNAL AT ITS RISING EDGE?
NO
YES
GENERATE NULL GENERATION STOP COMMAND SIGNAL
S2
GENERATE HEADER GENERATION COMMAND SIGNAL
S3
SUPPLY SELECTOR COMMAND SIGNAL TO SELECTIVELY OUTPUT DATA FROM HEADER DATA GENERATOR
S4
S5
HAS HEADER DATA BEEN COMPLETELY GENERATED?
NO
YES
GENERATE READ ENABLE SIGNAL
S6
SUPPLY SELECTOR COMMAND SIGNAL TO SELECTIVELY OUTPUT DATA FROM ASYNCHRONOUS FIFO
S7
S8
HAS 240-BIT VIDEO DATA BEEN READ?
NO
YES
STOP GENERATING READ ENABLE SIGNAL
S9
GENERATE HEADER GENERATION COMMAND SIGNAL
S21
SUPPLY SELECTOR COMMAND SIGNAL TO SELECTIVELY OUTPUT DATA FROM HEADER DATA GENERATOR
S22
HAS HEADER DATA BEEN COMPLETELY GENERATED?
NO
S23
YES
GENERATE NULL GENERATION COMMAND SIGNAL
S10
SUPPLY SELECTOR COMMAND SIGNAL TO SELECTIVELY OUTPUT DATA FROM NULL DATA GENERATOR
S11
END

FIG. 5

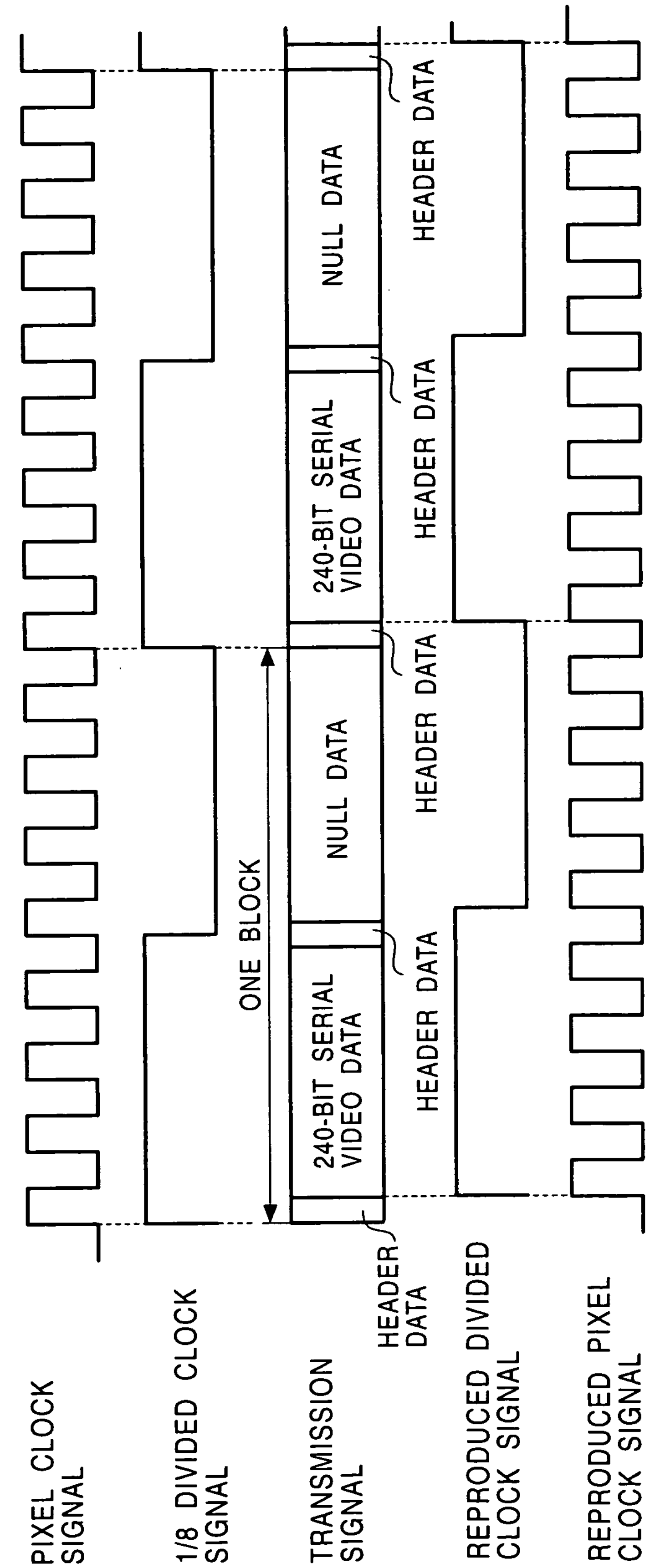
PIXEL CLOCK SIGNAL
1/8 DIVIDED CLOCK SIGNAL
TRANSMISSION SIGNAL
HEADER DATA
REPRODUCED DIVIDED CLOCK SIGNAL
REPRODUCED PIXEL CLOCK SIGNAL
ONE BLOCK
240-BIT SERIAL VIDEO DATA
NULL DATA
HEADER DATA
240-BIT SERIAL VIDEO DATA
NULL DATA
HEADER DATA
HEADER DATA
HEADER DATA
HEADER DATA

FIG. 6

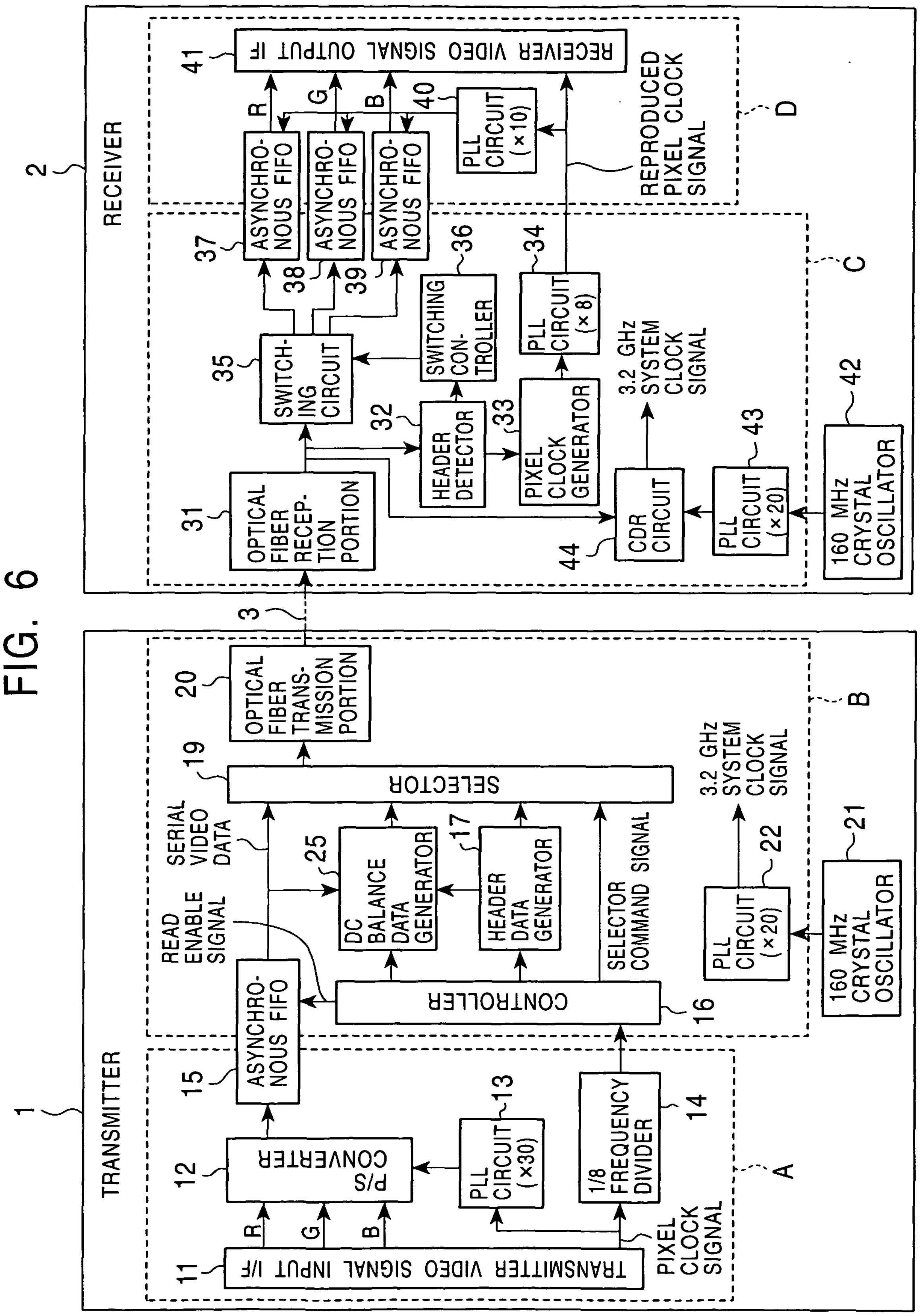
1
TRANSMITTER
2
RECEIVER
3
TRANSMITTER VIDEO SIGNAL INPUT I/F
11
R
G
B
PIXEL CLOCK SIGNAL
P/S CONVERTER
12
PLL CIRCUIT (×30)
13
1/8 FREQUENCY DIVIDER
14
ASYNCHRONOUS FIFO
15
A
CONTROLLER
16
READ ENABLE SIGNAL
SERIAL VIDEO DATA
DC BALANCE DATA GENERATOR
25
HEADER DATA GENERATOR
17
SELECTOR COMMAND SIGNAL
SELECTOR
19
OPTICAL FIBER TRANSMISSION PORTION
20
PLL CIRCUIT (×20)
22
3.2 GHz SYSTEM CLOCK SIGNAL
160 MHz CRYSTAL OSCILLATOR
21
B
OPTICAL FIBER RECEPTION PORTION
31
HEADER DETECTOR
32
PIXEL CLOCK GENERATOR
33
PLL CIRCUIT (×8)
34
SWITCHING CIRCUIT
35
SWITCHING CONTROLLER
36
ASYNCHRONOUS FIFO
37
ASYNCHRONOUS FIFO
38
ASYNCHRONOUS FIFO
39
CDR CIRCUIT
44
3.2 GHz SYSTEM CLOCK SIGNAL
PLL CIRCUIT (×20)
43
160 MHz CRYSTAL OSCILLATOR
42
C
PLL CIRCUIT (×10)
40
RECEIVER VIDEO SIGNAL OUTPUT IF
41
REPRODUCED PIXEL CLOCK SIGNAL
D

FIG. 7

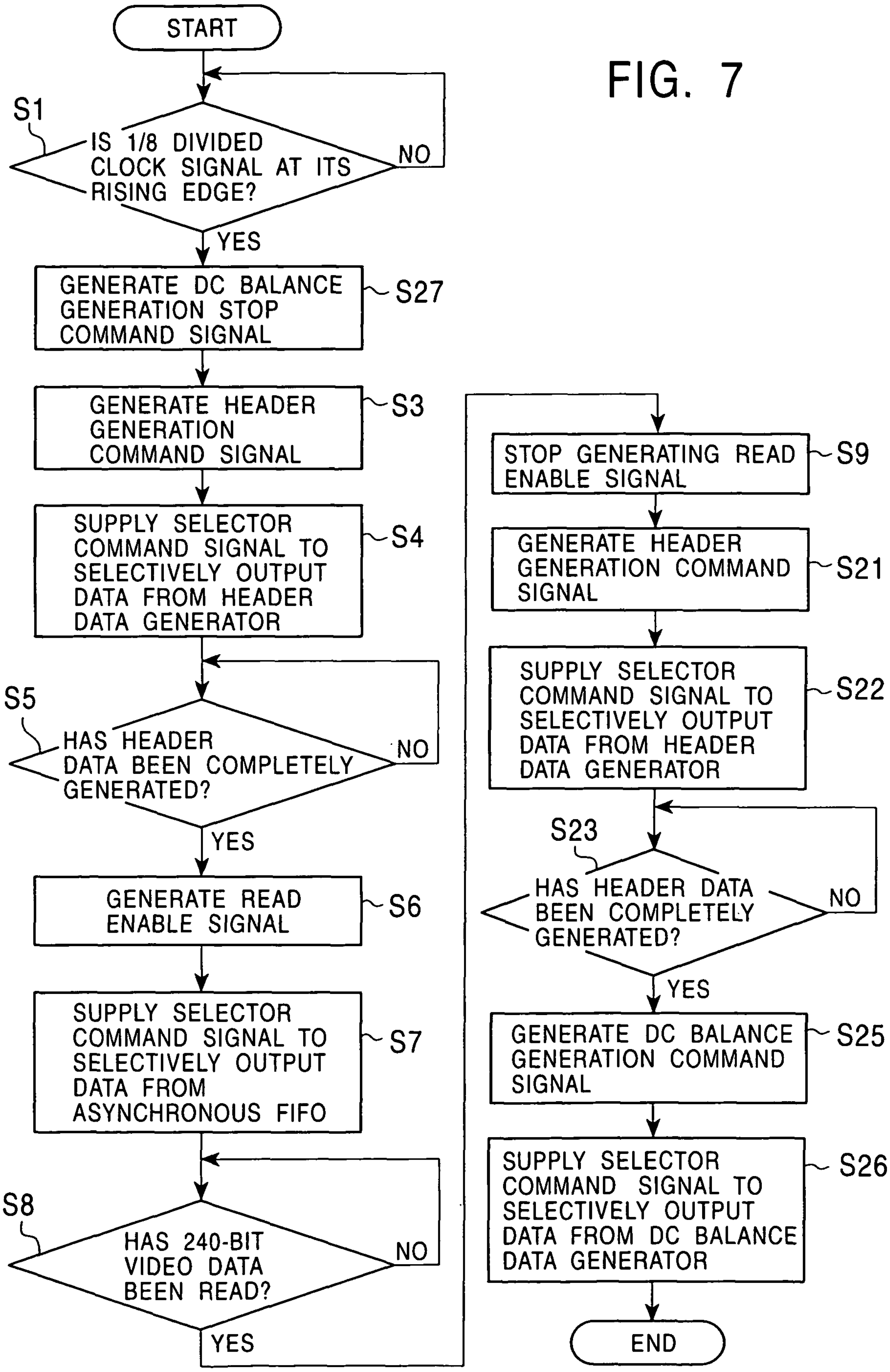
START
S1
IS 1/8 DIVIDED CLOCK SIGNAL AT ITS RISING EDGE?
NO
YES
GENERATE DC BALANCE GENERATION STOP COMMAND SIGNAL
S27
GENERATE HEADER GENERATION COMMAND SIGNAL
S3
SUPPLY SELECTOR COMMAND SIGNAL TO SELECTIVELY OUTPUT DATA FROM HEADER DATA GENERATOR
S4
S5
HAS HEADER DATA BEEN COMPLETELY GENERATED?
NO
YES
GENERATE READ ENABLE SIGNAL
S6
SUPPLY SELECTOR COMMAND SIGNAL TO SELECTIVELY OUTPUT DATA FROM ASYNCHRONOUS FIFO
S7
S8
HAS 240-BIT VIDEO DATA BEEN READ?
NO
YES
STOP GENERATING READ ENABLE SIGNAL
S9
GENERATE HEADER GENERATION COMMAND SIGNAL
S21
SUPPLY SELECTOR COMMAND SIGNAL TO SELECTIVELY OUTPUT DATA FROM HEADER DATA GENERATOR
S22
S23
HAS HEADER DATA BEEN COMPLETELY GENERATED?
NO
YES
GENERATE DC BALANCE GENERATION COMMAND SIGNAL
S25
SUPPLY SELECTOR COMMAND SIGNAL TO SELECTIVELY OUTPUT DATA FROM DC BALANCE DATA GENERATOR
S26
END

FIG. 8

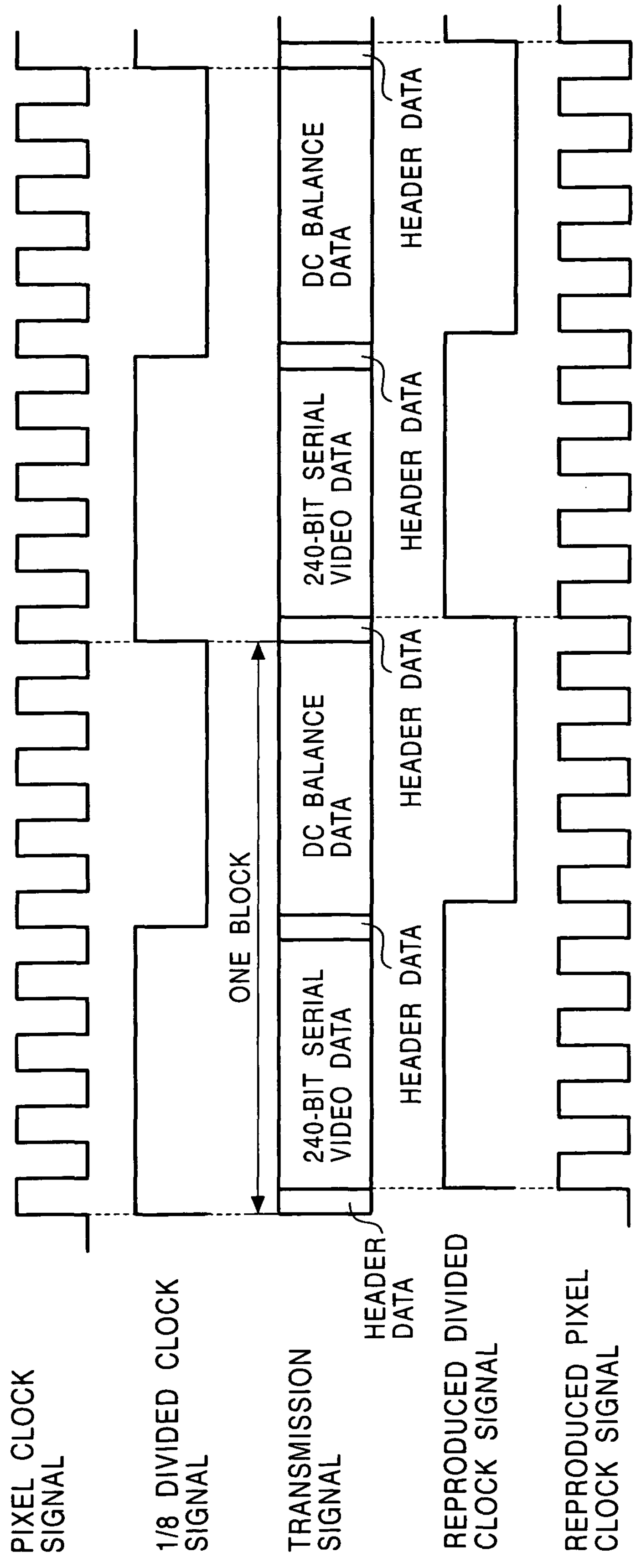
PIXEL CLOCK SIGNAL
1/8 DIVIDED CLOCK SIGNAL
TRANSMISSION SIGNAL
HEADER DATA
REPRODUCED DIVIDED CLOCK SIGNAL
REPRODUCED PIXEL CLOCK SIGNAL
ONE BLOCK
240-BIT SERIAL VIDEO DATA
HEADER DATA
DC BALANCE DATA
HEADER DATA
240-BIT SERIAL VIDEO DATA
HEADER DATA
DC BALANCE DATA
HEADER DATA

FIG. 9

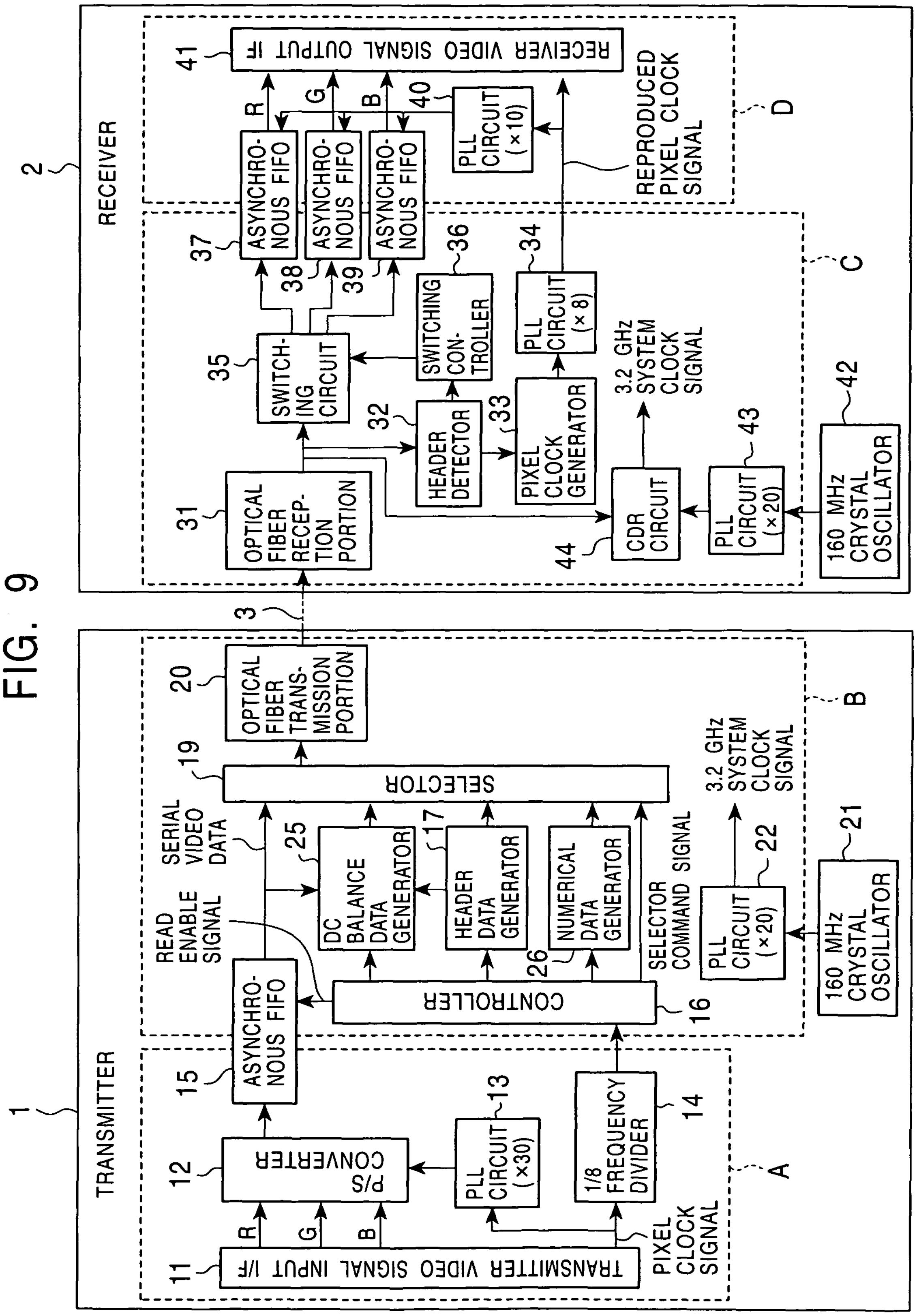
TRANSMITTER
RECEIVER
TRANSMITTER VIDEO SIGNAL INPUT I/F
P/S CONVERTER
PLL CIRCUIT (×30)
1/8 FREQUENCY DIVIDER
PIXEL CLOCK SIGNAL
ASYNCHRO-NOUS FIFO
READ ENABLE SIGNAL
SERIAL VIDEO DATA
CONTROLLER
DC BALANCE DATA GENERATOR
HEADER DATA GENERATOR
NUMERICAL DATA GENERATOR
SELECTOR COMMAND SIGNAL
SELECTOR
OPTICAL FIBER TRANS-MISSION PORTION
PLL CIRCUIT (×20)
3.2 GHz SYSTEM CLOCK SIGNAL
160 MHz CRYSTAL OSCILLATOR
OPTICAL FIBER RECEP-TION PORTION
SWITCH-ING CIRCUIT
HEADER DETECTOR
SWITCHING CON-TROLLER
PIXEL CLOCK GENERATOR
PLL CIRCUIT (×8)
CDR CIRCUIT
ASYNCHRO-NOUS FIFO
PLL CIRCUIT (×10)
REPRODUCED PIXEL CLOCK SIGNAL
RECEIVER VIDEO SIGNAL OUTPUT IF
R
G
B
A
B
C
D
1
2
3
11
12
13
14
15
16
17
19
20
21
22
25
26
31
32
33
34
35
36
37
38
39
40
41
42
43
44

FIG. 10

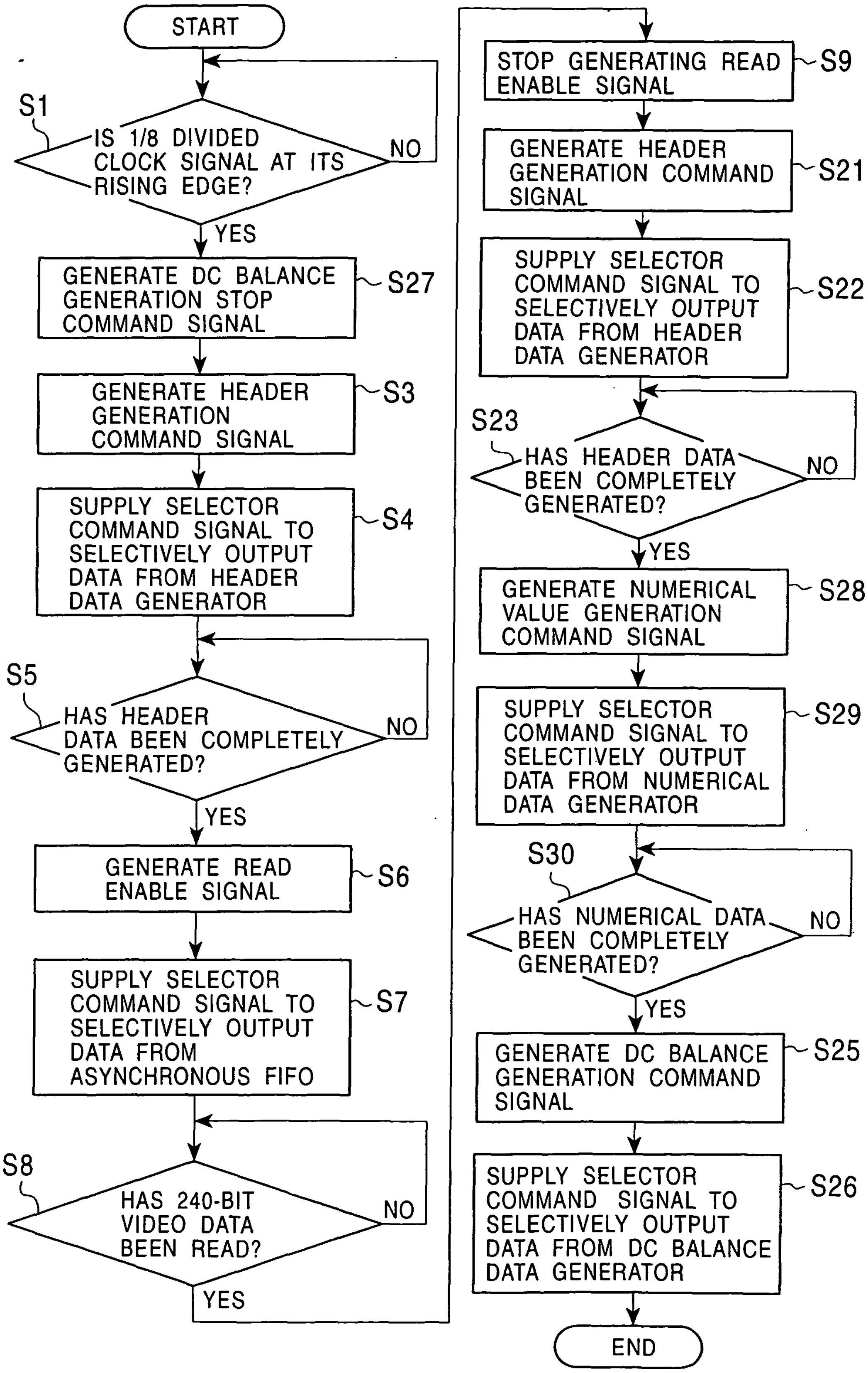
START
S1
IS 1/8 DIVIDED CLOCK SIGNAL AT ITS RISING EDGE?
NO
YES
GENERATE DC BALANCE GENERATION STOP COMMAND SIGNAL
S27
GENERATE HEADER GENERATION COMMAND SIGNAL
S3
SUPPLY SELECTOR COMMAND SIGNAL TO SELECTIVELY OUTPUT DATA FROM HEADER DATA GENERATOR
S4
S5
HAS HEADER DATA BEEN COMPLETELY GENERATED?
NO
YES
GENERATE READ ENABLE SIGNAL
S6
SUPPLY SELECTOR COMMAND SIGNAL TO SELECTIVELY OUTPUT DATA FROM ASYNCHRONOUS FIFO
S7
S8
HAS 240-BIT VIDEO DATA BEEN READ?
NO
YES
STOP GENERATING READ ENABLE SIGNAL
S9
GENERATE HEADER GENERATION COMMAND SIGNAL
S21
SUPPLY SELECTOR COMMAND SIGNAL TO SELECTIVELY OUTPUT DATA FROM HEADER DATA GENERATOR
S22
S23
HAS HEADER DATA BEEN COMPLETELY GENERATED?
NO
YES
GENERATE NUMERICAL VALUE GENERATION COMMAND SIGNAL
S28
SUPPLY SELECTOR COMMAND SIGNAL TO SELECTIVELY OUTPUT DATA FROM NUMERICAL DATA GENERATOR
S29
S30
HAS NUMERICAL DATA BEEN COMPLETELY GENERATED?
NO
YES
GENERATE DC BALANCE GENERATION COMMAND SIGNAL
S25
SUPPLY SELECTOR COMMAND SIGNAL TO SELECTIVELY OUTPUT DATA FROM DC BALANCE DATA GENERATOR
S26
END

FIG. 11

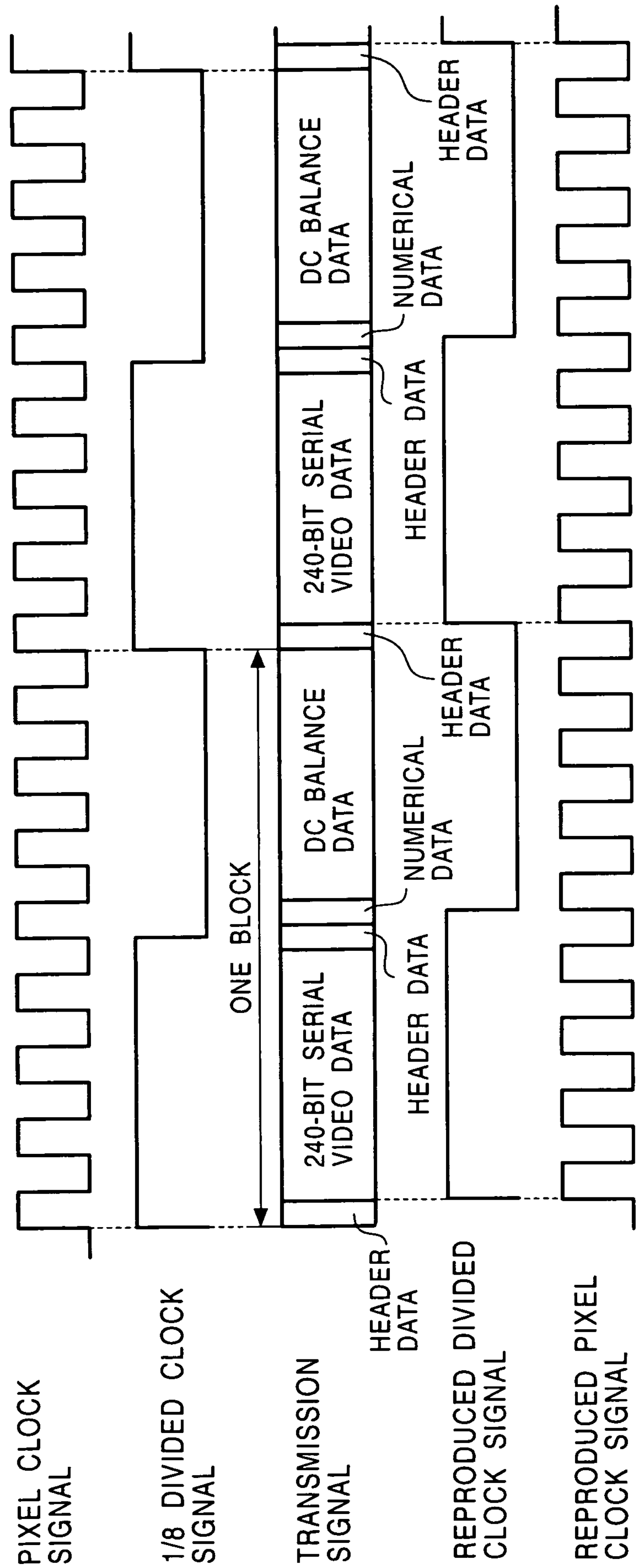
PIXEL CLOCK SIGNAL
1/8 DIVIDED CLOCK SIGNAL
TRANSMISSION SIGNAL
REPRODUCED DIVIDED CLOCK SIGNAL
REPRODUCED PIXEL CLOCK SIGNAL
ONE BLOCK
HEADER DATA
240-BIT SERIAL VIDEO DATA
HEADER DATA
NUMERICAL DATA
DC BALANCE DATA
HEADER DATA
240-BIT SERIAL VIDEO DATA
HEADER DATA
NUMERICAL DATA
DC BALANCE DATA
HEADER DATA

FIG. 12

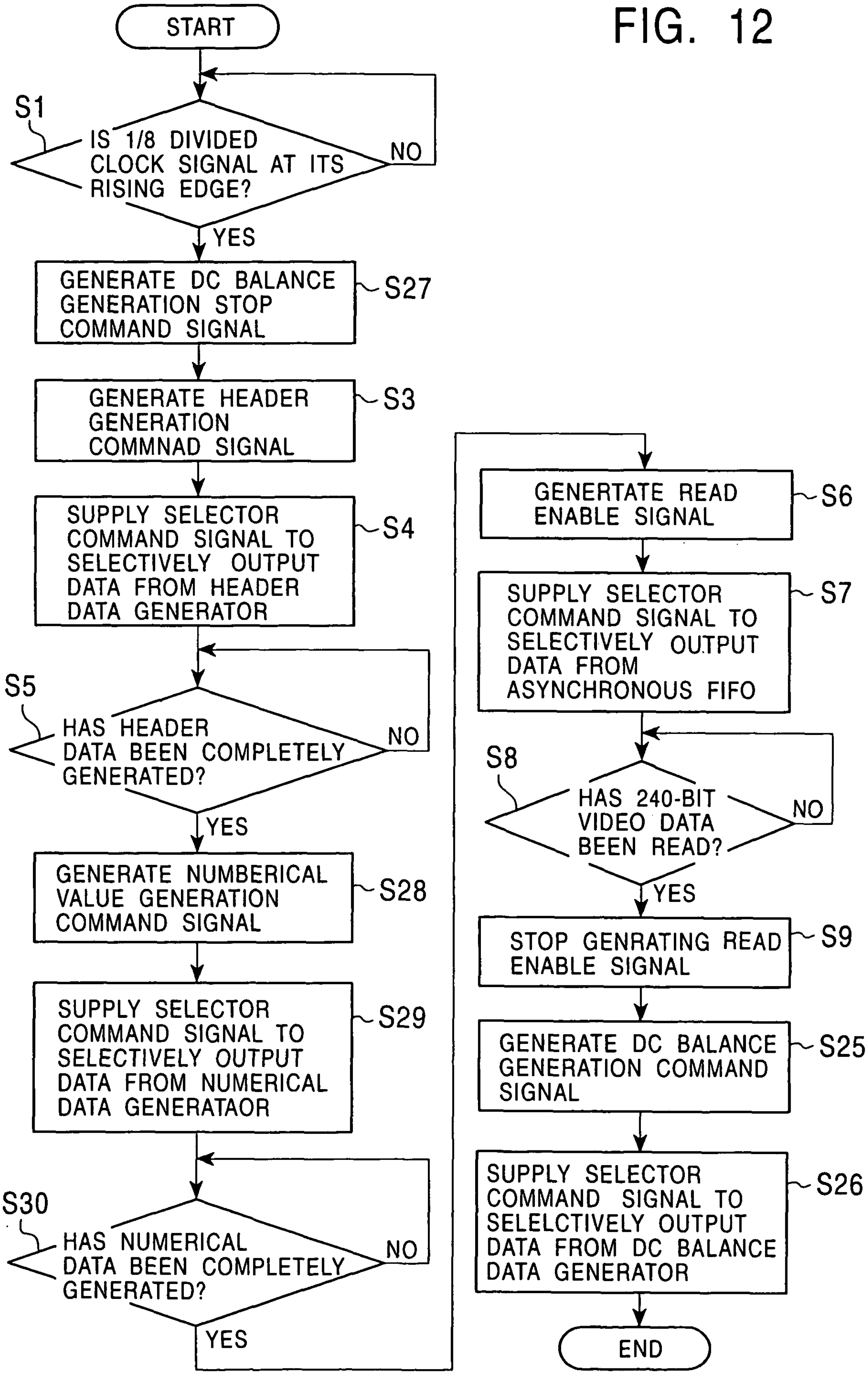
START
S1
IS 1/8 DIVIDED CLOCK SIGNAL AT ITS RISING EDGE?
NO
YES
GENERATE DC BALANCE GENERATION STOP COMMAND SIGNAL
S27
GENERATE HEADER GENERATION COMMNAD SIGNAL
S3
SUPPLY SELECTOR COMMAND SIGNAL TO SELECTIVELY OUTPUT DATA FROM HEADER DATA GENERATOR
S4
S5
HAS HEADER DATA BEEN COMPLETELY GENERATED?
NO
YES
GENERATE NUMBERICAL VALUE GENERATION COMMAND SIGNAL
S28
SUPPLY SELECTOR COMMAND SIGNAL TO SELECTIVELY OUTPUT DATA FROM NUMERICAL DATA GENERATAOR
S29
S30
HAS NUMERICAL DATA BEEN COMPLETELY GENERATED?
NO
YES
GENERTATE READ ENABLE SIGNAL
S6
SUPPLY SELECTOR COMMAND SIGNAL TO SELECTIVELY OUTPUT DATA FROM ASYNCHRONOUS FIFO
S7
S8
HAS 240-BIT VIDEO DATA BEEN READ?
NO
YES
STOP GENRATING READ ENABLE SIGNAL
S9
GENERATE DC BALANCE GENERATION COMMAND SIGNAL
S25
SUPPLY SELECTOR COMMAND SIGNAL TO SELELCTIVELY OUTPUT DATA FROM DC BALANCE DATA GENERATOR
S26
END

FIG. 13

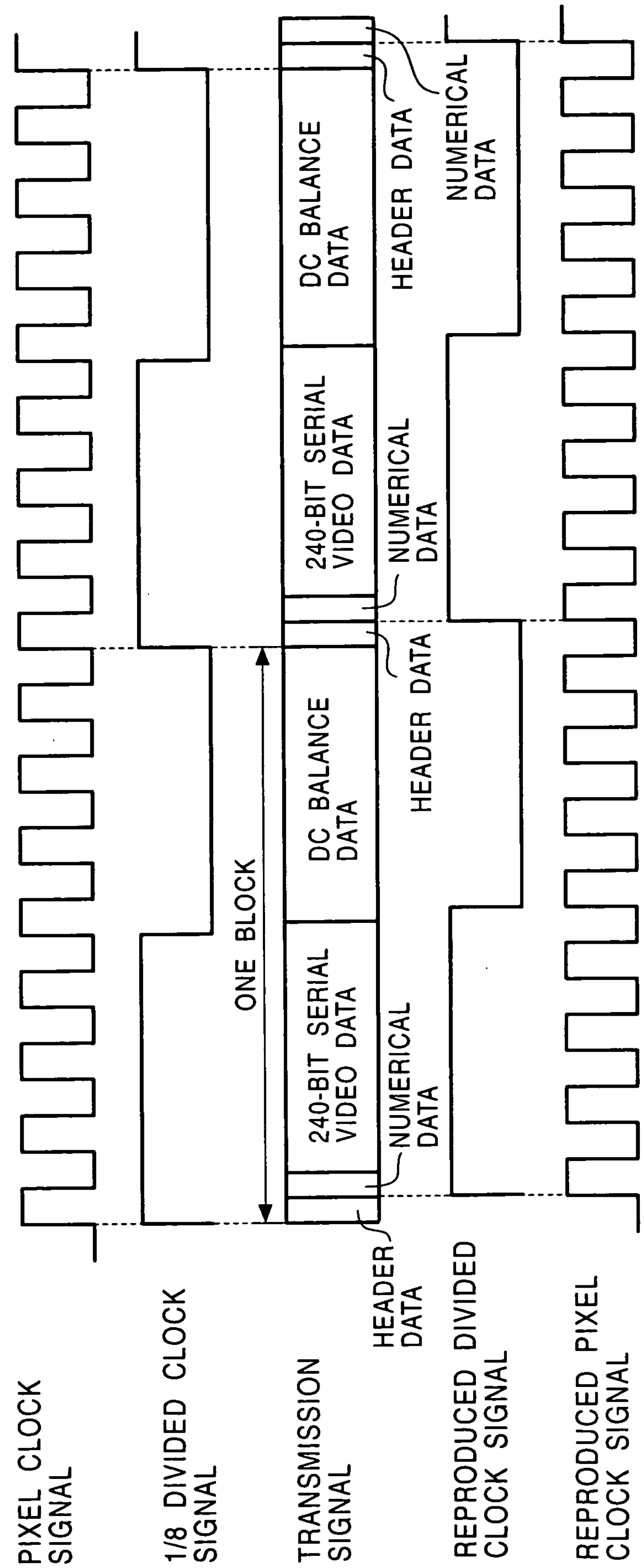
PIXEL CLOCK SIGNAL
1/8 DIVIDED CLOCK SIGNAL
TRANSMISSION SIGNAL
HEADER DATA
REPRODUCED DIVIDED CLOCK SIGNAL
REPRODUCED PIXEL CLOCK SIGNAL
ONE BLOCK
240-BIT SERIAL VIDEO DATA
DC BALANCE DATA
NUMERICAL DATA
HEADER DATA
240-BIT SERIAL VIDEO DATA
DC BALANCE DATA
NUMERICAL DATA
HEADER DATA
NUMERICAL DATA

European Patent Office

# EUROPEAN SEARCH REPORT

Application Number
EP 04 02 0564

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 999 501 A (SAMSUNG ELECTRONICS CO LTD) 10 May 2000 (2000-05-10)<br>* paragraph [0004] - paragraph [0014] *<br>* paragraph [0017] - paragraph [0024]; figures 1,2 *<br>----- | 1 | H04N11/04<br>H04N7/22 |
| A | US 6 226 043 B1 (NAKADA YOSHIHIRO) 1 May 2001 (2001-05-01)<br>* figure w *<br>----- | 1 | |
| A | PATENT ABSTRACTS OF JAPAN vol. 0112, no. 44 (E-530), 8 August 1987 (1987-08-08) & JP 62 056092 A (TOSHIBA CORP), 11 March 1987 (1987-03-11)<br>* abstract *<br>----- | 1 | |
| A | PATENT ABSTRACTS OF JAPAN vol. 0172, no. 23 (E-1359), 7 May 1993 (1993-05-07) & JP 4 355589 A (KOKUSAI ELECTRIC CO LTD), 9 December 1992 (1992-12-09)<br>* abstract *<br>----- | 1 | |
| | | | TECHNICAL FIELDS SEARCHED (Int.Cl.7) |
| | | | H04N |

The present search report has been drawn up for all claims

| Place of search | Date of completion of the search | Examiner |
|---|---|---|
| The Hague | 1 November 2004 | Fuchs, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 04 02 0564

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2004

| Patent document cited in search report | | Publication date | Patent family member(s) | | | Publication date |
|---|---|---|---|---|---|---|
| EP 0999501 | A | 10-05-2000 | KR | 2000031209 | A | 05-06-2000 |
| | | | CN | 1261227 | A ,B | 26-07-2000 |
| | | | EP | 0999501 | A1 | 10-05-2000 |
| | | | JP | 2000152225 | A | 30-05-2000 |
| | | | TW | 445752 | B | 11-07-2001 |
| | | | US | 6549317 | B1 | 15-04-2003 |
| US 6226043 | B1 | 01-05-2001 | JP | 11243560 | A | 07-09-1999 |
| JP 62056092 | A | 11-03-1987 | NONE | | | |
| JP 4355589 | A | 09-12-1992 | NONE | | | |

EPO FORM P0459

For more details about this annex : see Official Journal of the European Patent Office, No. 12/82